# EUROPEAN PATENT SPECIFICATION

(11) **EP 2 670 801 B1**
(45) Date of publication and mention of the grant of the patent: **17.06.2020**
(21) Application number: 12741916.6
(22) Date of filing: 01.02.2012
(51) Int. Cl.: C08K 9/04, B44F 11/00, C09D 11/00

(54) **TRANSPARENT INFRARED ABSORBING MATERIALS**
TRANSPARENTE INFRAROTABSORBIERENDE MATERIALIEN
MATÉRIAUX TRANSPARENTS ABSORBANT LE RAYONNEMENT INFRAROUGE

(30) Priority: 01.02.2011 AU 2011900302
(43) Date of publication of application: 11.12.2013
(60) Divisional application: 16171434.0
(73) Proprietor: Reserve Bank of Australia, Sydney, NSW 2000 (AU)
(72) Inventor: SUBRAMANIAN, Priya, Burwood, Victoria 3125 (AU); JACKSON, Wayne Kevin, Rosanna, Victoria 3085 (AU); BATEMAN, Stuart Arthur, Mount Waverely, Victoria 3150 (AU); CASEY, Philip Stephen, Mount Waverley, Victoria 3149 (AU); HARRIS, Dominic Richard, Mount Waverley, Victoria 3149 (AU)
(74) Representative: Barker Brettell LLP
(86) International application number: PCT/AU2012/000078
(87) International publication number: WO 2012/103578

(56) References cited:
- EP-A1- 0 663 429
- WO-A1-2008/086931
- JP-A- 2004 168 842
- US-A1- 2007 082 963
- US-A1- 2007 210 287
- US-A1- 2009 093 578
- US-A1- 2009 117 278
- US-A1- 2010 059 691
- US-B1- 6 706 460
- US-B2- 6 911 254
- US-B2- 7 550 193
- LANGHALS, H.: 'Control of the Interactions in Multichromophores: Novel Concepts. Perylene Bis-imides as Components for Larger Functional Units' HELVETICA CHIMICA ACTA vol. 88, 2005, pages 1309 - 1343, XP055125733

## Description

### FIELD OF THE INVENTION

This invention relates in general to transparent infrared absorbing materials. In particular, the transparent infrared absorbing materials can be applied to the transparent window security feature of polymer banknotes, and it is convenient to describe it in this manner. However, it should be noted that the invention is not limited to this application.

### BACKGROUND TO THE INVENTION

Polymer banknotes have been in circulation in Australia since 1992, when the first denomination in the current banknote series was issued. Polymer banknotes offer many advantages over traditional paper banknotes, specifically longer life and enhanced security. One of the major reasons for the increased security of polymer banknotes is the use of a transparent window.

However, the use of transparent windows in banknotes can cause problems for banknote processing equipment such as automatic teller machines (ATMs), banknote counting machines, banknote acceptors and the like.

Typically, many optical sensors are required to determine the position of a banknote within banknote processing equipment, or the completeness of the banknote i.e. whether there are any holes in the banknote. The inclusion of transparent windows without any consideration for the operation of optical sensors can disrupt efficient machine processing of polymer banknotes by third parties. From a security perspective, it also restricts the optimum use of window designs for counterfeit deterrence.

US patent no. 6,706,460 discloses a latex composition comprising water as a continuous phase and, as the dispersed phase, hydrophobic polymer particles having associated therewith an infrared polymethine dye having covalently bonded thereto a phenylenediamine moiety. The document also discloses a process for associating dye with polymer particles in a latex composition.

US patent application no. 2007/00210287 discloses a method of making a transparent plastic article having control solar energy transmittance properties. In one embodiment, this document provides a fluid thermoplastic material, and adding from about 0.003% by weight to about 0.1% by weight of a blend of perylene based dye and a nanoparticle hexabromide based IR absorber to form a mixture.

US patent application no. 2009/009578 discloses a biaxially stretched transparent acrylic sheet having a controlled solar energy transmittance properties for aircraft window systems. The biaxially stretched transparent acrylic sheet includes a thermoplastic acrylic polymer, and from about 0.003% by weight to about 0.1% by weight of an IR absorbing material, the weight percentage based on the total weight of the acrylic polymer and the IR absorbing material.

### Machine Processing of Banknotes

Over the past 20 years there has been exponential growth in the use of machines for counting, sorting and authenticating banknotes. These machines range from simple banknote counters used by a myriad of retail outlets, to counting machines that can denominate (typically used by commercial banks), automatic teller machines, banknote acceptors used in vending machines and gaming equipment, and high-speed note processors used by large cash-in-transit companies and central banks to authenticate, denominate, count and sort banknotes.

For such equipment to function efficiently, it is essential that the machine detects the presence of a banknote and when it is ready to be received/processed, and that the banknote is correctly aligned throughout its transport. This enables such equipment to correctly count banknotes, and to present the banknote to a higher level sensor which efficiently presents the banknotes to the end user. Machines of all types tend to have a series of sensors which determine that a single banknote is being processed, and that notes are not stuck together.

The leading edge of a banknote is fundamental to the operation of banknote processing equipment. The machine is required to detect the starting position of the banknote within its transport, and thereafter detect various machine-readable characteristics of the banknote, such as magnetics, fluorescence, printed indicia, opacity, etc. These characteristics can be used for authentication of a banknote. The second reason for determining banknote presence is to ensure that the note is intact and that there are no missing pieces, holes or tears, which can lead to machine 'jams'. A further reason is to ensure an accurate count of banknotes.

In general, banknote equipment manufacturers seek to use optical sensors that achieve a large signal to noise ratio (which can overcome soiling from contaminants, including airborne particulate contaminants), and which reduce hardware costs (sensor and receiver). Machine manufacturers usually select sensors that are commonly used and which are robust and economical, in particular infrared (IR) sensors.

IR sensors use light emitting diodes which emit a monochromatic source of light in the near-infrared (NIR) region. These IR sensors either work in transmission mode or reflection mode. Under reflection mode, the IR beam and the IR sensors are placed in tandem. When the IR beam strikes the transparent window of the banknote, it is transmitted instead of being reflected. The sensor therefore perceives the clear area as being no different from the surrounding air. Because of this, the signal to noise ratio is low, and the machine's sensor software judges that there is no banknote present. If the signal to noise ratio was high, the software would consider that a banknote was present. Under transmission mode, the IR beam and the IR sensors are placed on opposite sides of the banknote. When the IR beam strikes the transparent window of the banknote the IR beam is uninterrupted as it travels through the polypropylene film. Because of this the signal to noise ratio is high, and the sensor software judges no banknote is present.

It is therefore desirable from a machine processing perspective to provide an infrared absorbing material which is suitable for application to, or incorporation within, a transparent window of a security document, such as a banknote, that enables the window area to be detected by IR sensors, without significantly affecting other properties of the window.

It is also desirable to provide a transparent infrared adsorbing material that exhibits strong absorbency of radiation in the IR spectrum, and which exhibits good transmission of light in the visible spectrum.

Any discussion of documents, devices, acts or knowledge in this specification is included to explain the context of the invention. It should not be taken as an admission that any of the material formed part of the prior art base or the common general knowledge in the relevant art in Australia on or before the priority date of the claims herein.

### SUMMARY OF THE INVENTION

According to one aspect of the present invention there is provided a transparent infrared absorbing material including: a carrier vehicle; and at least one infrared absorbing dye supported on nanoparticles having an average size of not greater than 100 nm, wherein the dye-supporting nanoparticles are formed from inorganic material and are dispersed in the carrier vehicle such that the infrared absorbing material is substantially transparent to visible radiation, and wherein the carrier vehicle is a printing medium.

According to another aspect of the invention there is provided a method of producing the above transparent infrared absorbing material or ink formulation including the steps of: mixing at least one infrared absorbing dye with particles of an inorganic or organic material, nanomilling the mixture to produce nanoparticles of the inorganic or organic material on which the infrared absorbing dye is supported, the nanoparticles having an average size of not greater than 100 nm, and dispersing the dye-supporting nanoparticles in a carrier vehicle to produce an infrared absorbing material which is substantially transparent to visible radiation.

Preferably the printing medium is an ink, resin or varnish. The carrier vehicle may be a polymer-based resin. The carrier vehicle is preferably substantially transparent to visible radiation.

In one preferred embodiment, the carrier vehicle is a substantially transparent radiation curable vehicle which is curable by radiation when applied to a substrate to form a substantially transparent film on the substrate. The vehicle may be curable by any of the following types of radiation, such as heat (IR), light, ultraviolet radiation, electron beams and X-rays. Examples of radiation curable vehicles include UV curable inks and resins, such as acrylate based resins, for example, Sicpa HV OC6.

According to a third aspect of the invention there is provided an ink formulation including one or more resins or blend of resins, at least one infra red absorbing dye supported on nanoparticles having an average size not greater than 100 nm at least in one direction, wherein the nanoparticles are formed from inorganic material and are dispersed in a carrier vehicle such that the ink formulation is substantially transparent to visible radiation.

Preferably, wherein the resin or blend of resins is selected from thermoplastic, elastomeric or thermoset resins or an aqueous or solvent based resin dispersion.

The one or more infrared absorbing dyes may be supported on the same type of nanoparticles or on different types of nanoparticles.

The formulation or material may include at least one other infrared absorbing dye not supported on nanoparticles.

The formulation or material may include other additives, agents or components selected from but not limited to rheology modifiers, flow control agents, surfactants, adhesion promoters, adhesive resins, UV absorbers, flame retardents, surface finishing agents that promote gloss or matt finish, other solvents to improve miscibility or dispersion or other dispersants.

In some preferred embodiments the formulation or material may include one or more agents which facilitate a bathochromic or hypsochromic shift, for example, amines or hydroxyl-ethyl modified amines.

The average size of the nanoparticles in at least one direction in the material or ink formulation preferably falls substantially within the range from about 30nm to about 100nm, and more preferably from about 50nm to about 80nm. Preferably, the average size of the nanoparticles is at least 30nm.

The nanoparticles are preferably nanoparticles formed from at least one IR absorbing material. The nanoparticles may be formed from a conducting, semi-conducting or insulating material. The IR absorbing material or materials may include any one or more of the following: a metallic or semi-conducting species, such as silicon and its compounds, a metal, a metal salt, a metal oxide or a metal nitride, or a mixture of any two or more of these materials. The metallic or semi-conducting species may be selected from the group consisting of group 13, group 14, transition metals and rare earth metals. Preferably, the metallic or semi-conducting species is selected from a group including silicon, germanium, the metallic elements of period 3, the metallic elements of period 4, the metallic elements of period 5, the metallic elements of the lanthanide series, and compounds of these elements. Examples of particularly preferred materials for the nanoparticles include alumina (Al₂O₃), silica (SiO₂), clays and micas, including fluoromica clays and modified montmorillonites, such as Cloisite B (registered trade mark), lanthanum and its compounds, such as lanthanum hexaboride (LaB₆), indium compounds, such as indium tin oxide (ITO), and combinations of such materials. Other possible IR absorbing materials for the nanoparticles include titanium metal and its compounds, such as titanium nitride, zirconium and its compounds, such as zirconium nitride, molybdenum metal and compounds thereof, copper and its compounds, such as copper chromate, neodymium and its compounds, such as neodymium oxide and neodymium chloride, dysprosium and its compounds, such as dysprosium oxide and praseodymium oxide.

The at least one dye in the material or ink formulation may consist of any IR-absorbing dye. Preferably the infrared abosorbing dye is an organic or complexed dye. Preferred dyes include perylene-based dyes, including IR absorbing dyes sold under the trade mark Lumogen by BASF, for example, Lumogen 765 or 788. Another preferred dye is dithiolene dyes sold under the brand name Epolight, such as Epolight 3072 or 4105 or 2057. Other NIR dyes which can be used are those sold under the brand name ADS. For example, ADS798SM or ADS890MC are potential candidates but are compromised by their colour and/or non- transparency.

In another preferred embodiment the IR material, the ink formulation or the method of production results in a bathochromic or hypsochromic shift such that absorbance wavelength may be shifted from a low to a higher wavelength or from a higher to a lower wavelength using physical, chemical or thermal means during production.

In a further aspect of the invention, the transparent infrared absorbing material of the first aspect, or the ink formulation of the third aspect, is used in the manufacture of a security document.

Further described herein is a security document incorporating a transparent infrared absorbing material in accordance with the first aspect of the invention. A preferred embodiment of this aspect is a security document including a transparent window wherein the infrared absorbing material is applied to the window.

In an alternative embodiment, the infrared absorbing material may be applied to an opaque area of a security document. In this case the infrared absorbing material may form a covert security feature which is detectable by measuring the amount of infrared radiation reflected by the security feature.

Also described is a security document including a transparent window, wherein an infrared absorbing material is applied to or incorporated within the window.

The infrared absorbing material preferably includes an infrared absorbing dye. Suitable IR absorbing dyes including but not limited to perylene-based or complexed dyes, such as Lumogen 765 or 788 or any improvements on these. Alternatively, or additionally, the infrared absorbing material includes infrared absorbing nanoparticles preferably having an average size of not greater than 100nm. The average size of the IR absorbing nanoparticles preferably falls substantially within the range from about 30nm to 100nm, and more preferably from about 50nm to about 80nm. The nanoparticles may be formed from an IR absorbing material. In a particularly preferred embodiment of this aspect, an infrared absorbing dye is supported on nanoparticles of IR absorbing materials, such as described above.

The infrared absorbing material may be applied to the transparent window in the form of a printing medium, such as a transparent ink, resin or varnish. It is also possible that the infrared absorbing material could be incorporated in a transparent substrate forming the window of the security document.

In a particularly preferred embodiment, the security document is a banknote.

### BRIEF DESCRIPTION OF THE DRAWINGS

It will be convenient to further describe the invention with respect to the accompanying drawings. Other embodiments of the invention are possible, and consequently, the particularity of the accompanying drawings is not to be understood as superseding the generality of the preceding description of the invention.
Figure 1 shows a cross-section through a polymer banknote incorporating an infrared absorbing material within a window area of the banknote.
Figure 2 shows the reflectance spectra of air and a piece of paper.
Figure 3 shows the reflectance spectra of air and transparent Biaxially Oriented Polypropylene (BOPP) film.
Figure 4 shows a UV-Vis-NIR transmission profile for coatings based on LaB₆.
Figure 5 shows a UV-Vis-NIR transmission profile for coatings based on LaB₆ and ITO.
Figure 6 shows Lumogen 788 in UV cured film at high and low concentration.
Figure 7 shows Lumogen 788 in UV cured film at varying concentrations.
Figure 8 shows the reflectivity of coatings containing various concentrations of Lumogen 788.
Figure 9 shows the spectra of UV cured coatings containing various concentrations of Lumogen 788 before and after QUV exposure.
Figure 10 shows the colour shift of Lumogen 788 in UV cured film after QUV exposure.
Figure 11 shows the spectral performance of Lumogen 788 when using a clarified resin and when using an unclarified resin.
Figure 12 shows the UV-Vis-NIR transmission profile for Lumogen 788 on various nanosubstrates.
Figure 13 is similar to Figure 12 and shows the Bathochromic shift when Lumogen 788 is supported on Fluoromica MEE (dipolyoxyethylene alkyl ammonium).
Figure 14 shows the Absorbance vs Wavelength profile for a formulation of IR122 with and without the addition of Cloisite 30B.
Figure 15 shows the Absorbance vs Wavelength profile for a formulation of Lumogen 788 and MEE at ambient temperature and at an elevated temperature.
Figure 16 shows the Absorbance vs Wavelength profiles for formulations of Lumogen 788 with different amounts of Cloisite 30B added, one of which was heated to an elevated temperature.
Figure 17 shows the Absorbance vs Wavelength profile for a formulation of Lumogen 788 without Cloisite 30B added at an ambient temperature and at an elevated temperature.
Figure 18 shows the Absorbance vs Wavelength profile for a formulation of Lumogen 765 with Cloisite added using different techniques.
Figure 19 shows the Transmission vs Wavelength profile for formulations of Somasif ME 100 with and without the addition of triethanolamine.

### DESCRIPTION OF PREFERRED EMBODIMENTS

### Definitions

Throughout the specification the following definitions are used.

Nanoparticle: A nanomaterial having an average size of not greater than 100nm at least in one direction.

Resins: Resins include polymers and polymeric resins.

### Description

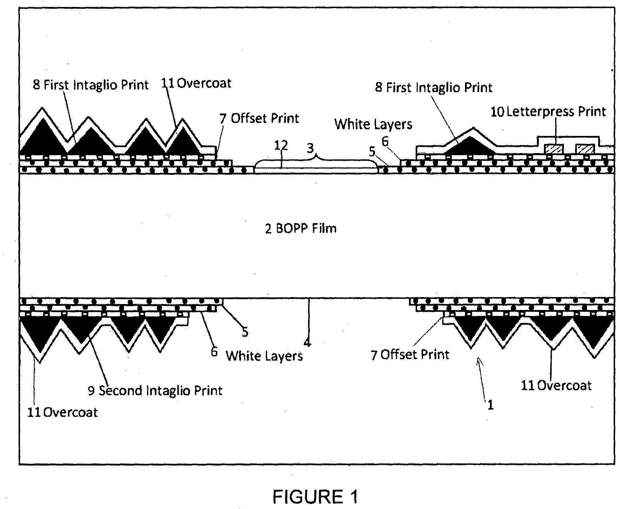

Figure 1 is a cross-section of a polymer banknote 1 formed from a substrate 2 of transparent polymeric material having a number of layers and coatings applied to each side of the substrate 2 except in an area 3 which forms a clear window 4. The substrate 2 may be formed from any transparent polymeric material which is flexible. In one preferred embodiment, the substrate 2 is formed from a film of Biaxially Oriented Polypropylene (BOPP) about 70-80 microns thick.

The layers and coatings applied to each side of the substrate 2 preferably include one or more opacifying layers 5, 6 and various printed ink layers. The opacifying layers 5, 6 may comprise pigmented coatings including a pigment, such as titanium dioxide, dispersed within a binder or carrier of cross-linkable polymeric material. Such opacifying coatings form white layers 5, 6 on the substrate which are substantially opaque to visible and IR radiation and which facilitate the subsequent application of the printed ink layers to form designs on the banknote. The opacifying layers 5, 6 may be applied by rotogravure printing, sometimes referred to simply as Gravure printing. The printed ink layers may include any one or more of the following: offset print layers 7; intaglio print layers 8, 9; letterpress printing 10 and Gravure printing. A clear overcoat 11, such as a clear resin or varnish, may be applied over the printed ink layers 7-10.

The window 4 of the banknote may include at least one security feature 12 such as an embossing, a lens or microlens structure, a diffraction grating, a hologram or other optically variable device (OVD).

The polymer banknote 1 of Figure 1 differs from conventional polymer banknotes in that it includes a transparent infrared (IR) absorbing material applied as a coating 12 on the area 3 of the transparent substrate 2 forming the clear window 4 of the banknote. The transparent infrared (IR) absorbing material may be applied on one or both sides of the substrate in the area of the window 4. The transparent infrared (IR) absorbing material is adapted to absorb IR radiation while being substantially transparent to radiation in the visible spectrum. Thus the clear window 4 with the IR absorbing material applied substantially prevents the transmission of IR so that the presence of the banknote can be detected by IR detectors, e.g. in cash machines, without substantially affecting the security aspects of the window, i.e. the clear window 4 itself and any security feature located in the window.

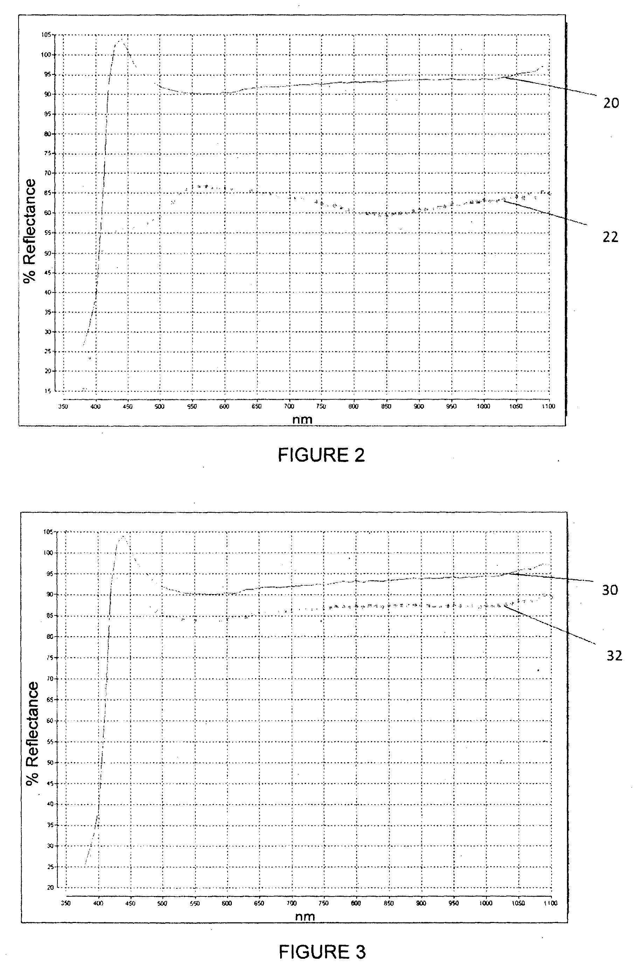

For traditional paper banknotes, cash machine sensors are either simple mechanical pressure transducers or optical sensors which measure relative opacity, i.e. the differential between air and a piece of paper. Figure 2 shows the reflectance spectra of air 20 and a piece of paper 22. The differential between the two spectra is significant, more than 30%. Mechanical pressure sensors are capable of measuring either a paper or a polymer banknote, whereas many optical sensors are incapable of discriminating the difference between a transparent polymeric substrate, e.g. Biaxially Oriented Polypropylene (BOPP) film, and air. This is because the relative opacity differential between a transparent substrate and air is not significant. Figure 3 shows the differential between the reflectance spectra of a BOPP transparent film 32 and air 30 is less than 5%. The capability of the sensors to discriminate between BOPP 32 and air 30 is essential to detect the leading edge of the note and/or any missing portion or hole within the banknote.

To overcome the above problem a transparent infrared absorbing material that meets the following criteria was created:
1. Robust (meeting all the physical and chemical resistance banknote durability tests);
2. Clarity (allowing light to pass diffusely enabling a clear unobstructed view of an object/image seen through the window);
3. Transparency in the visible region 400-700nm (preferably less than 20% absorption when measured using a UV-Vis spectrophotometer); and
4. Absorbency of IR in a defined region.

Furthermore, it is desirable to have automatic reading devices be able to identify currency whilst being imperceptible to the general public. The incorporation of visually transparent NIR (near infrared) absorbing additives into proprietary printing ink system(s) for the printing of banknotes and/or the plastic substrate itself can address this problem.

Transmission of infrared radiation is governed by the ability of the IR absorbing materials to absorb in the wavelengths of interest (the absorption coefficient), the concentration of the IR absorbing material in the system (additive loading) and the path length through which the light passes (film or substrate thickness).

Current NIR dyes have the potential to achieve a solution but performance limitations include low thermal and environmental stability, narrow absorption wavelength range and absorption carry over into the visible region.

There are many IR absorbing dyes available, however maintaining visual transparency and clarity with a high absorption in the IR region with use of a small concentration of dyes has not been achievable until now.

An alternative approach is that based on the use of NIR absorbing nano-additives. In recent years there has been increasing interest in the use of inorganic additives to control the transmission, absorption and reflectance of NIR wavelengths particularly in applications for solar control coatings. In these applications, appreciable NIR absorption/reflection combined with visible transparency attributes is sought which may be achieved by reducing the additive size to a dimension well below that of the wavelength of light (400-700nm).

It should be noted that many known organic IR absorbing dye compounds are complex molecules and their application as a visually transparent IR absorbing in the NIR region is highly limited due to the difficulty in processing them for application. Broadly, the present invention overcomes the limitations of processing such IR materials by supporting an IR absorbing dye on nanoparticles having an average size of not greater than 100nm and dispersing the dye-supporting nanoparticles within a carrier or vehicle, such an ink or resin. This may be achieved by using a unique nanomilling technique which reduces the average particle size to a dimension not greater than 100nm, i.e. well below that of the wavelength of visible light (400-700nm).

The nanomilling technique optimises the particle size distribution and level of dispersion by tailoring its surface chemistry to the specific matrix employed. Both particle size distribution and surface chemistry can be simultaneously varied by incorporating surface modifying agents into the reactive milling process.

Nanoparticles are produced by a nanomilling process. This nanomilling process produces particles with a distribution of sizes. The nanomilling process used involves putting two particulate entities together, the dye and the carrier particle, in a matrix or mill base and then milling. During the milling process dye based materials are incorporated into/onto the carrier particle as it undergoes comminution. This process avoids agglomeration or separation of the dye into a separate phase within the matrix and is used to disperse the IR nanoparticles within the final carrier ink or resin without agglomeration. Preferably, the dye based nanoparticles are then dispersed throughout the resin. By supporting the dye on nanoparticles of selected clays a bathochrome wavelength shift to higher NIR wavelengths occurs. This not only allows a very small concentration of IR pigments/dyes to be used to achieve a visually transparent coating but with a stronger and broader absorption range in the IR region. Nanoparticles have one or more of their dimensions substantially smaller than the wavelength of visible light (400-700nm) and thus have the potential to appear transparent when dispersed in a coating or thin film. Consequently, the spacing between nanoparticles when dispersed in a matrix is critical for potential transparency to be achieved. Because the dye is supported on carrier nanoparticles, when these are effectively dispersed the dye itself will also be effectively dispersed such that it does not substantially affect the transparency of the coating/film resin matrix to visible light while simultaneously allowing it to be detected by IR sensors.

It is important that the window on polymer banknotes remains transparent for security purposes. However, it must be able to absorb IR for machine detection. Most IR absorbing materials are green, this provides approximately 40% absorbency. Therefore, it is necessary to have smaller IR absorbing particles, preferably having an average size of not more than 100 microns.

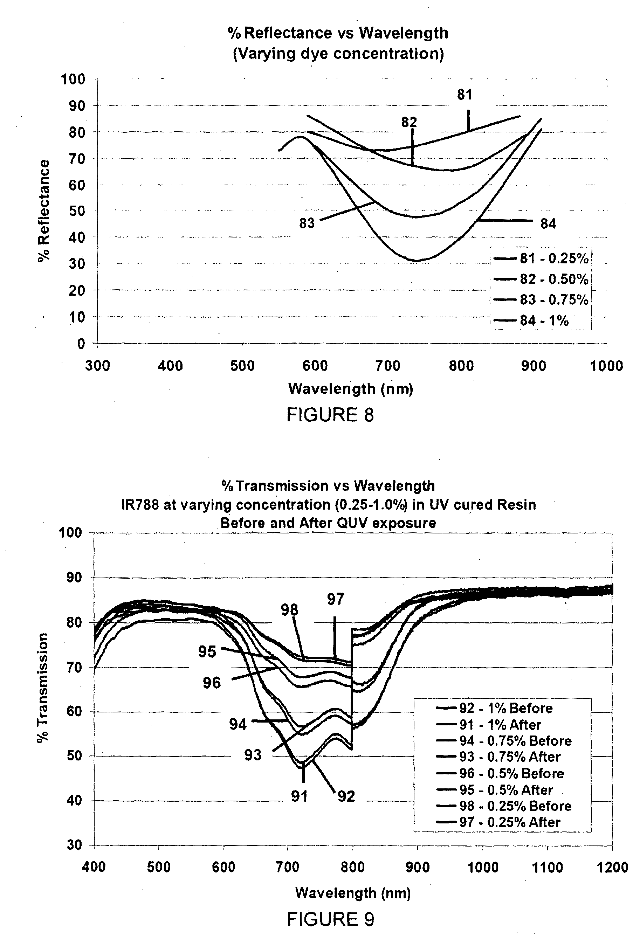

Most IR absorbing dyes have poor light fastness. The IR absorbing dyes and nanoparticles mixed in overcoat UV resin in this invention are robust and can survive harsh chemicals and QUV exposure. Figure 9 illustrates the percentage transmission vs wavelength for IR 788 at varying concentration in UV cured resin before and after QUV exposure.

The use of nearly transparent IR inks on the window will allow use of larger windows on the banknote design which will not be an impediment in the IR sensor. The presence of IR properties in these ink systems will make it easier for the IR sensors to detect the presence of a banknote even with a larger window.

Semiconductor materials such as metal oxides can be processed from sub-micron size to nanoparticulate size using the nanomilling technique. The nanoparticulate can then be applied on a clear banknote window for authentication using IR sensors in banknote processing machines.

Alternatively, the IR absorbing material could be applied over an opaque portion of the banknote, to provide a covert security feature, for example, an IR signature.

The preparation and trials of some different IR absorbing materials will now be described.

### Inorganic Addditives

Lanthanum hexaboride (LaB₆) and indium tin oxide (ITO), both IR absorbing inorganic materials were used to make transparent infrared absorbing materials.

Firstly, wet formulation dispersions and/or nano-dispersions were prepared using proprietary milling protocol/techniques and normally included a predetermined combination of raw additive, the resin system, a diluent if required, usually methyl ethyl ketone (MEK) and/or a surfactant. Simultaneous size reduction and chemical modification occurred during this process and required milling times of typically greater than 24 hours. At the end of a mill run, grinding media is separated from the mill base by either centrifugation or sieving. This mill base concentrate was then used to prepare films and/or coatings.

Sprayed films on Mylar (clear PET) targeted formulations in the uncured polymer resin system. The coating liquid was thinned down with spraying thinners (2 parts to 1) and sprayed with one coat. This was left for 20 minutes for the solvent to evaporate. Film thicknesses were typically 5-10 microns thick.

Films were cured by UV using an Ecocure 1 Bench Top Laboratory UV cure unit. The light source is a medium pressure mercury vapour lamp (1.5kW), controlled by two level power (high: 120 watt/cm², low: 70 watt/cm²) with conveyor speeds ranging from 0.550m/min; irradiation zone of 180x25mm (belt width/length 180mm/1900mm). Curing was judged by loss of tackiness of the test coating and no generation of discolouration.

The spectral properties of the films were determined using a spectrophotometer in absorption/transmission mode typically across a wavelength range of 300nm - 3000nm.

Lanthanum hexaboride (LaB₆) and indium tin oxide (ITO), two IR absorbing inorganic materials were used. LaB₆ absorbs between 750nm and 1400nm and is generally only available as micron sized particles (approximately 10 microns). Indium tin oxide (ITO) absorbs from 1200nm to greater than 2400 nm. ITO is available as nanometric size particles (40nm).

Nanomilling conducted with LaB₆ and ITO resulted in particle sizes of 40-80nm for LaB₆ and approximately 25nm for ITO. Dispersants can be used to assist comminution and restrain however, they do not eliminate agglomeration. Formulations using high concentrations of LaB₆ pigment loading (up to 10%) in UV curing resin alone, i.e. no diluent, resulted in substantial flocculation rendering the dispersion unusable. When the same formulation was prepared using dispersants flocculation occurred.

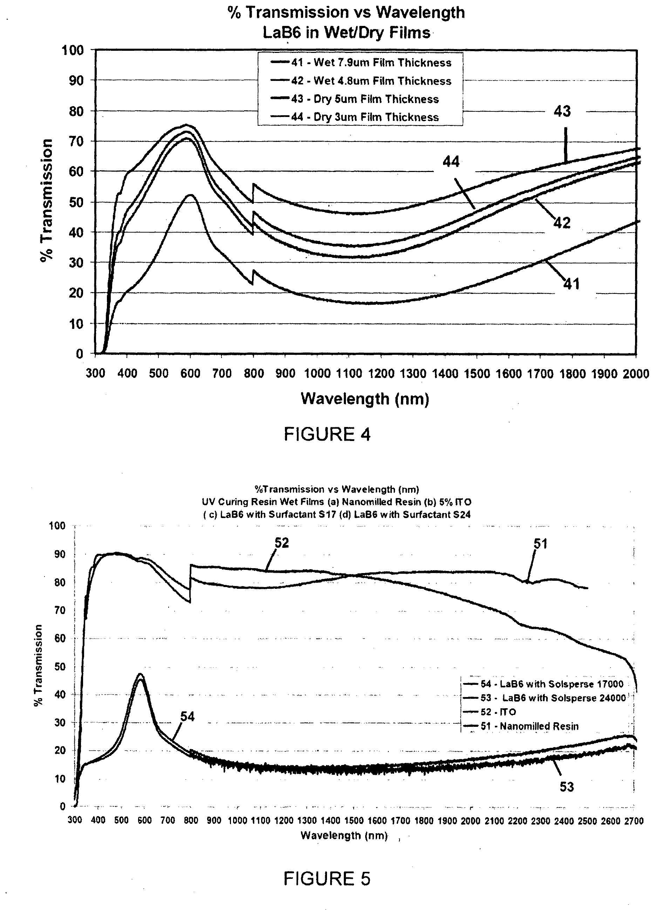

Figures 4 and 5 show typical UV-Vis-NIR transmission profiles for a series of UV curing films containing nanoparticles of LaB₆ only (Figure 4) and films containing based on nanoparticles of LaB₆ and ITO. In Figure 4, line 41 is the transmission profile for a wet 7.9µm film thickness, line 42 for a wet 4.8µm film thickness, line 43 for a dry 5.0µm film thickness and line 44 for a dry 3µm film thickness. This figure shows that the use of LaB₆ alone has good potential but requires optimisation of wettability, dispersion and coating processing.

In Figure 5 line 51 is the transmission profile for a nanomilled resin without additive, line 52 for resin containing 5% ITO, line 53 for LaB₆ with surfactant Solsperse 24000 and line 54 for LaB₆ with surfactant Solsperse 17000.

The NIR absorption band for LaB₆ is in the desired spectral range (900-1000nm). However, for ITO NIR absorption is only effective above approximately 1500nm.

High NIR absorption and low transmission (less than 50%) requires elevated loadings (up to 5 wt%) to achieve the target NIR range with LaB₆. High NIR absorption and low transmission (less than 50%) with high visible transparency (approximately 70%) is achieved in the target NIR range.

Elevated LaB₆ loadings (greater than 0.44 wt%), compromise coating colour and also compromise the gloss finish appearance of the coatings. This gives rise to a stippled matt finish presenting an increasingly speckled appearance. At lower loadings this effect is less pronounced.

The use of LaB₆ alone requires optimisation of wettability, dispersion and coating processing. Its use in combination with a NIR dye is more promising.

### NIR Absorbing Dyes

BASF Lumogen IR 765 and Lumogen IR 788, perylene-based IR dyes, are visibly transparent in plastics while absorbing in the IR. They are usually marketed for use in the laser welding of plastics.

Lumogen IR 765 incorporated into PVB (polyvinyl butyral) shows 60% reduced NIR transmission between 700-800 nm with high visible transmission (>90%). When coated onto nanoparticles of LaB₆ a further reduction in IR transmission to about 50% resulted but the visible transmission was compromised from 90% to about 70%. When the same dye was incorporated into a UV curing resin and cured, even at concentrated levels, little or no solubilisation occurred presumably due to the dye recrystallising, producing blotchy films with little or no IR absorption.

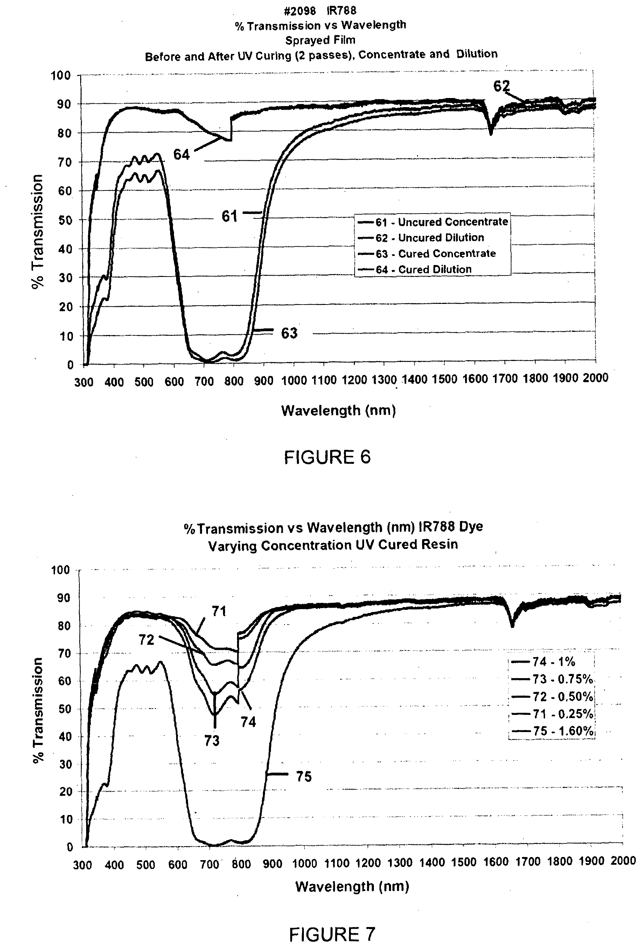

Lumogen IR 788 is effective in controlling NIR transmission between 0% and 90% in the near desired range when incorporated into the existing base resin. It is not significantly affected by exposure to UV during curing or prolonged QUV exposure. Colour shift in the coatings after prolonged QUV exposure is minimal (ΔE* is less than 3) and high visible transmissions can simultaneously be attained. Lumogen IR 788 was incorporated into UV cured films at both high and low concentration and cured in the usual way. At high dye concentrations IR transmission was reduced to almost 0% but some compromise in visible transmission. At low concentrations there is little absorbance because the optical density of the dye was too low. The dye was not significantly affected by exposure to UV during curing. This is shown in Figure 6 (concentrated and diluted) and Figure 7 (systematic concentration variation). In Figure 6, line 61 shows the uncured concentrate, line 62 the uncured dilution, line 63 the cured concentrate and line 64 the cured dilution. In Figure 7, line 71 shows a dye concentration of 0.25%, line 72 a dye concentration of 0.5%, line 73 a dye concentration of 0.75%, line 74 a dye concentration of 1.0% and line 75 a dye concentration of 1.6%. Figure 8 shows the reflectance vs wavelength for coatings containing varying concentrations of Lumogen IR 788. Line 81 shows a dye concentration of 0.25%, line 82 a dye concentration of 0.5%, line 83 a dye concentration of 0.75% and line 84 a dye concentration of 1.0%.

A common constraint that limits the wider use of dyes is their light stability. A series of UV cured coatings containing a systematically varied (Lumogen) dye concentration (0.25 - 1% dye) were exposed to UV for three days (72hrs) in a Q-Lab accelerated weathering cabinet using a lamp UV wavelength of 340 nm, energy intensity of 0.6 w/m² and a set temperature of 40°C. No condensation cycle was used. Figure 9 displays the transmission vs wavelength for UV cured coatings containing varying concentrations of Lumogen IR 788. The UV-Vis-NIR spectra before and after exposure of each sample was compared (for straight dye) and this is shown in Figure 9. In Figure 9, line 91 shows an IR788 dye concentration of 0.25% after QUV exposure, line 92 a 0.25% concentration of IR788 before QUV exposure, line 93 a 0.5% concentration of IR788 after QUV exposure, line 94 a 0.5% concentration of IR788 before QUV exposure, line 95 a 0.75% concentration of IR788 after QUV exposure, line 96 a 0.75% concentration of IR788 before QUV exposure, line 97 a 1.0% concentration of IR788 after QUV exposure, and line 98 a 1.0% concentration of IR788 before QUV exposure. Figure 9 indicates that the Lumogen 788 dye is relatively insensitive to prolonged QUV exposure (approximately 3 days). This is advantageous when exposed to many detectors.

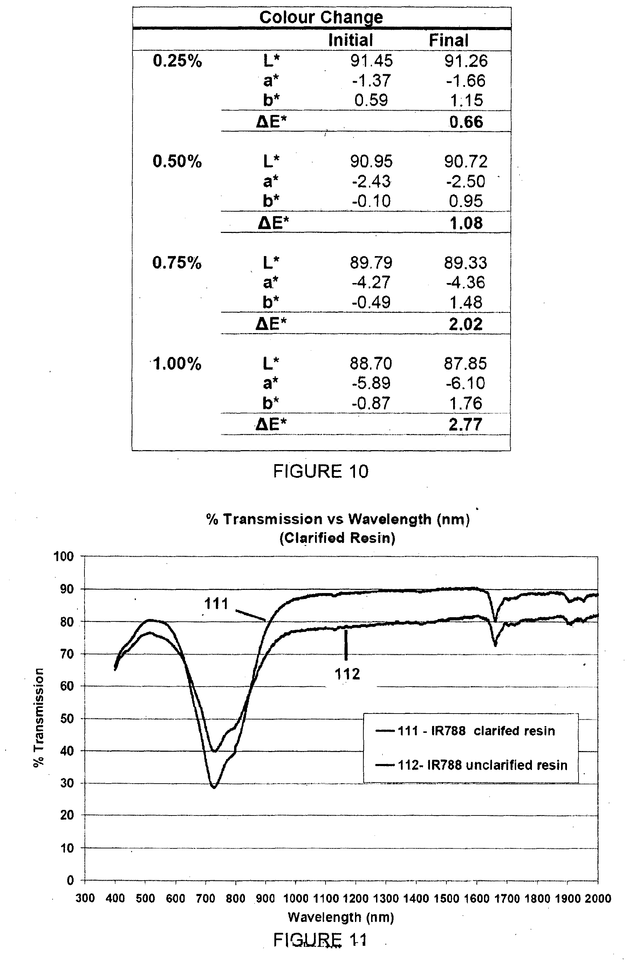

The measured colour shift for the straight dye is shown in the table of Figure 10. Figure 10 indicates that the colour shift in the coatings after prolonged QUV exposure is also minimal (ΔE* is less than 3). Therefore, even when exposed to multiple detectors or other QUV exposure the coatings will not significantly change colour.

The resin may contain pre-added solids for example talcs, silicas to improve printability, though the spectral performance can be improved if the base resin is clarified to reduce the pre-added solids. The spectral performance is improved by increasing the visible transmission and reducing the NIR transmission, this is shown in Figure 11. In Figure 11, line 111 shows the clarified resin and line 112 the unclarified resin.

### Dye With Nanoparticles

Lumogen IR 765 absorbed onto LaB₆ in PVB showed increased IR absorption over the dye itself. UV curing films were prepared that included Lumogen IR 765 on AluC (25nm Al₂O₃). In manually prepared films (wet and dry) a broad IR absorption band was observed with no absorption "spike" as had been observed with Lumogen IR 765 on LaB₆ in PVB. This was attributed to the non-solubilisation (recrystallisation) of Lumogen IR 765 in the UV curing resin.

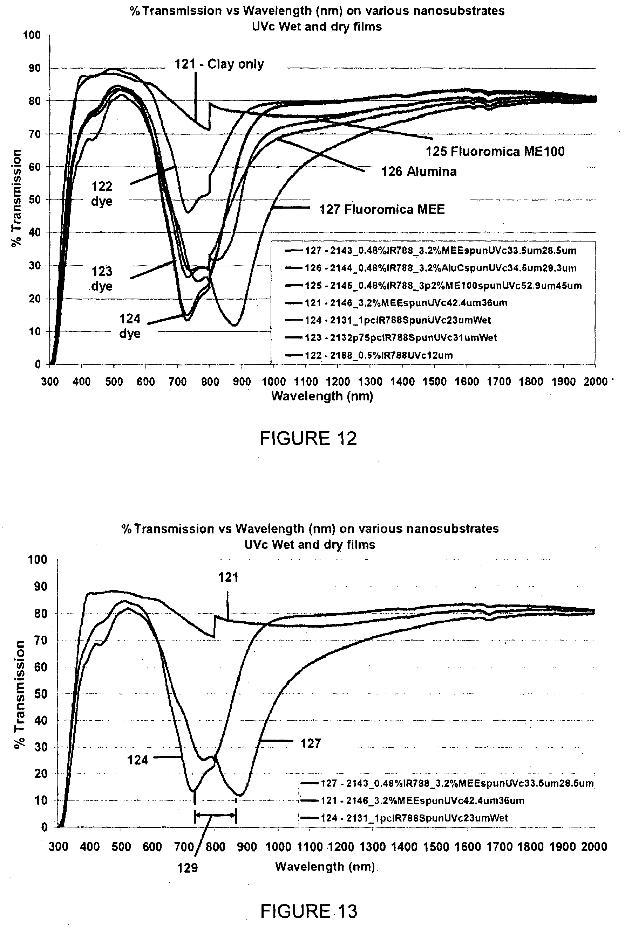

Lumogen IR 788 was milled in UV curing resin with various nanoadditive substrates e.g. AluC, Cloisite 30B and a series of modified fluoromica clays. The transmission vs wavelength profile for these materials is shown in Figures 12 and 13. In these figures, line 121 shows the profile for 3.2% MEE (modified with dipolyoxyethylene alkyl ammonium) spun UV curing clay resin, lines 122, 123 and 124 show the profiles for Lumogen IR 788 in a UV curing resin at concentrations of 0.5% (dry), 0.75% (wet) and 1% (wet), and lines 125, 126 and 127 show the profiles for Lumogen IR 788 at a concentration of 0.48% in the following UV curing resins : 3.2% Fuoromica ME100 spun clarified UV resin, 3.2% AluC spun clarified UV resin and 3.2% Fuoromica MEE (modified with dipolyoxyethylene alkyl ammonium) spun UV curing resin. Figure 13 is similar to Figure 12 and shows a bathochromic shift 129 of approximately 150nm in the dye absorption band which occurs between line 124 and line 127 when the Lumogen IR 788 dye is supported on nanoparticles of Fuoromica MEE (modified with dipolyoxyethylene alkyl ammonium). It was further discovered that this bathochromic shift could be produced during the mixing/milling preparation chemically by the addition of an amine such as triethanolamine or the application of heat applied by, but not limited to, radiant, inductive, sonication or microwave means such that the mixture was heated to a temperature above ambient but below 100°C, Furthermore, it was discovered that a hypsochromic shift could be produced in these systems chemically by hydrolysing with an organic acid so as to reduce the absorbance wavelength from approximately 870nm to 725nm.

Thus supporting an IR absorbing dye on nanoparticles of alumina or selected clays can broaden the absorption profile in the NIR region compared to the dye alone. A further advantage is that the molal absorption coefficient appears to be improved when supported on specific substrates. This allows the design of broader NIR absorption profiles by anchoring the IR absorbing dye onto nanoparticles such as nanoclay platelets.

The use of visually transparent materials based predominantly on NIR absorbing semi-conductor nanoparticles offer several advantages over straight NIR dyes. One advantage is improved thermal and environmental durability. Other advantages include broad NIR absorption characteristics and the potential for a lower cost product.

Such materials have the advantage of providing sufficiently detectable optical density in the NIR region without substantially compromising NIR optical attributes, visible transparency and/or colour or other non spectral material performance properties.

### Example - Bathochromic Shift with Cloisite 30B

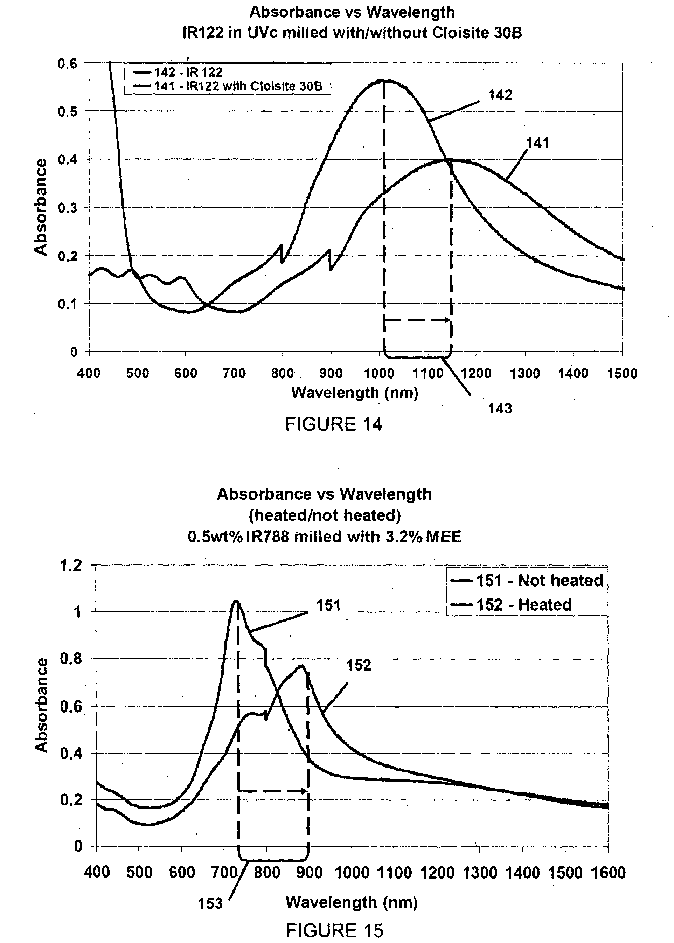

Formulations of a demonstration dye IR122 with Cloisite 30B and without Cloisite 30B were nanomilled and their absorbance measured. In Figure 14, line 141 represents the formulation with Cloisite 30B added and line 142 without Cloisite 30B added. A bathochromic wavelength shift 143 was observed when Cloisite 30B was included.

### Example - Bathochromic Shift (Thermal)

Figure 15 shows that a bathochromic shift is driven by elevated temperature using Lumogen 788 and MEE.

In this example, a formulation including 0.5% by weight of Lumogen IR788 and 3.2% by weight of Somasif MEE was nanomilled and its absorbance measured (but not heated) (line 151). The same formulation was then heated to slightly less than 100°C, remilled and its absorbance measured (heated) 152. A bathochromic wavelength shift was observed 153.

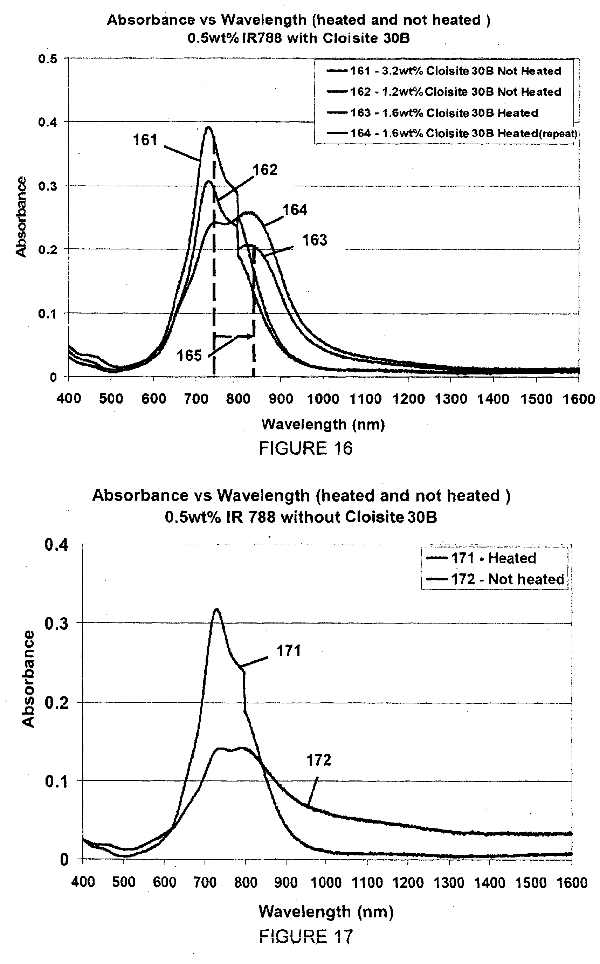

Another example shown in Figure 16 shows a bathochromic shift driven by elevated temperature using Lumogen 788 and Cloisite 30B.

In this example formulations of 0.5% by weight of Lumogen IR788 with different amounts of Cloisite 30B were nanomilled and their absorbances measured (not heated). Lines 161 and 162 respectively represent the absorbance spectra for formulations including 0.5% by weight of Lumogen 788 nanomilled with amounts of 3.2% and 1.2% by weight of Cloisite 30B measured at ambient temperature. Lines 163 and 164 represent the absorbance spectra for similar formulations (in duplicate) containing 1.6% by weight Cloisite 30B heated to slightly less than 100°C, remilled and their absorbance measured. In the heated duplicates 163,164, a bathochromic wavelength shift 165 was observed.

These examples show that increasing the Cloisite (clay) content from 1.2 wt% to 3.2 wt% does not induce the shift, ie the clay itself does not induce the shift. The heated sample at a 1.6 wt% Cloisite (clay) content was repeated to confirm that heat induces the effect.The slight difference in intensity difference between the two is likely due to experimental variability (probably slight differences in temperature). The effect of temperature is thus confirmed by duplicate behaviour.

In the example of Figure 17 heated 171 and unheated 172 formulations of Lumogen IR788 (no Cloisite) were nanomilled and their absorbance measured. No bathochromic shift was observed.

The example shown in Figure 17 shows that no bathochromic shift occurs when a clay (eg Cloisite) is not present.

### Example - Hypsochromic Shift Due To Temperature

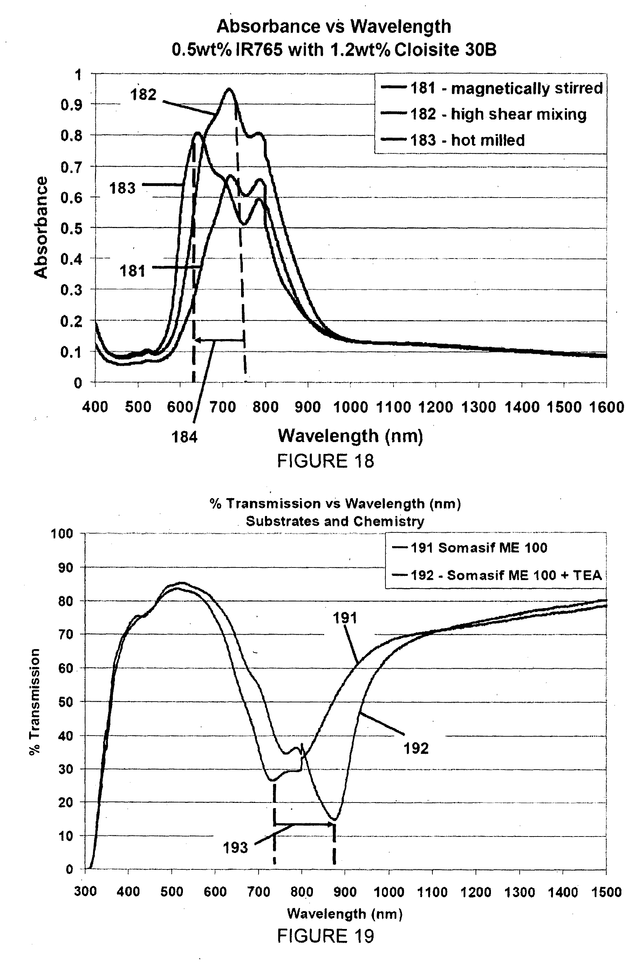

Another example shown in Figure 18 shows a hypsochromic shift using Lumogen IR765 and Cloisite 30B when hot milled. In this example, a formulation of 0.5% by weight of Lumogen IR765 and 1.2% by weight of Cloisite 30B was hot nanomilled at a temperature above 100°C. Its absorbance spectrum is shown at 183. Its absorbance shifted to a lower wavelength. Magnetic stirring 181 at ambient temperature and high shear mixing 182 at about 60°C produced little or no shift while hot milling at >100°C produced a hypsochromic shift 184.

### Example - Bathochromic Shift (Chemical)

Another example shown in Figure 19 shows a chemical bathochromic shift. In this example, two formulations of Lumogen IR788 and Somasif ME100 (unmodified fluoromica) were nanomilled. To one was added triethanolamine (Nitrogen tri-hydroxyethyl, TEA). A bathochromic shift 193 was observed when TEA was added. The absorbance spectra of the formulations without TEA and with TEA are shown respectively at 191 and 192.

## Claims

1. A transparent infrared absorbing material including:
a carrier vehicle; and
at least one infrared absorbing dye supported on nanoparticles having an average size of not greater than 100 nm,
wherein the dye-supporting nanoparticles are formed from inorganic material and are dispersed in the carrier vehicle such that the infrared absorbing material is substantially transparent to visible radiation, and
wherein the carrier vehicle is a printing medium.

2. A material according to claim 1 , wherein the average size of the nanoparticles falls substantially within the range from 30 nm to 100 nm, and more preferably from about 50 nm to about 80 nm.

3. A material according to claim 1 or claim 2, wherein the printing medium is an ink or resin.

4. A material according to any one of claims 1 to 3, wherein the carrier vehicle includes a polymer-based resin.

5. A material according to any one of the preceding claims, wherein the nanoparticles are formed from at least one IR absorbing material, or are formed from at least one conducting, semi-conducting material or insulating material.

6. A material according to claim 5, wherein the at least one IR absorbing material for the nanoparticles includes a metallic or semiconducting species, such as silicon and its compounds, a metal, a metal salt, a metal oxide or a metal nitride, or a mixture of any two or more of these materials.

7. A material according to claim 6, wherein the metallic or semi- conducting species is selected from the group consisting of group 13, group 14, transition metals and rare earth metals.

8. A material according to claim 6 or claim 7, wherein the metallic or semi-conducting species is selected from the group consisting silicon, germanium, the metallic elements of period 3, the metallic elements of period 4, the metallic elements of period 5 and the metallic elements of the lanthanide series.

9. A material according to claim 6, wherein the metallic species for the nanoparticles is selected from alumina (Al₂O₃), silica (SiO₂), clays and micas, including fluoromica clays and modified montmorillonites, such as Cloisite B, lanthanum and its compounds, such as lanthanum hexaboride (LaB₆), Indium and its compounds, such as indium tin oxide (ITO), and combinations of these materials.

10. A material according to any one of the preceding claims, wherein the infrared absorbing dye is an organic or complexed dye, or is a perylene-based or dithiolene-based dye.

11. A method of producing a transparent infrared absorbing material according to claim 1, or ink formulation including the steps of:
mixing at least one infrared absorbing dye with particles of an inorganic material,
nanomilling the mixture to produce nanoparticles of the inorganic material on which the infrared absorbing dye is supported, the nanoparticles having an average size of not greater than 100 nm, and
dispersing the dye-supporting nanoparticles in a printing medium carrier vehicle to produce an infrared absorbing material which is substantially transparent to visible radiation.

12. A method according to claim 11 wherein the method of production uses physical, chemical or thermal means that results in a bathochromic or hypsochromic shift.

13. A method according to claim 12, whereby the bathochromic or hypsochromic shift is obtained thermally by elevating the temperature of the formulation, preferably by heating the formulation to a temperature of between 40°C and 120°C, and more preferably a temperature falling substantially in the range from 80°C to 100°C.

14. A method according to claim 13, wherein the formulation is nanomilled during or after heating.

15. A method according to any one of claims 12 to 14, wherein the bathochromic or hypsochromic shift is obtained chemically by the use of at least one chemical modifier, preferably the at least one chemical modifier is selected from a group including amines and hydroxyl-ethyl modified amines.

16. A method according to any one of claims 13 to 15, wherein the heating and/or chemical modification are performed either as separate treatment steps or simultaneously while the formulation is being prepared under high shear mixing or milling conditions.

17. A security document incorporating a transparent infrared absorbing material according to any one of claims 1 to 10.

18. A security document according to claim 17, wherein the document includes a transparent window and the infrared absorbing material is applied to or incorporated within the window.

19. An ink formulation including one or more resins or blend of resins, at least one infra red absorbing dye supported on nanoparticles having an average size not greater than 100 nm at least in one direction, wherein the nanoparticles are formed from inorganic material and are dispersed in a carrier vehicle such that the ink formulation is substantially transparent to visible radiation.

20. An ink formulation according to claim 19, wherein the resin or blend of resins is selected from thermoplastic, elastomeric or thermoset resins or an aqueous or solvent based resin dispersion.

21. An ink formulation according to claim 19 or claim 20, wherein one or more infrared absorbing dyes are supported on the same type of nanoparticle or different types of nanoparticles.

22. An ink formulation according to any one of claims 19 to 21, wherein the formulation further includes at least one other infrared absorbing dye not supported on nanoparticles.

23. An ink formulation according to any one of claims 19 to 22, wherein the ink formulation includes other additives, agents or components selected from but not limited to rheology modifiers, flow control agents, surfactants, adhesion promoters, adhesive resins, UV absorbers, flame retardants, surface finishing agents that promote gloss or matt finish, other solvents to improve miscibility or dispersion or other dispersants.

24. An ink formulation according to any one of claims 19 to 23, wherein the ink formulation includes agents which facilitate bathochromic or hypsochromic shift, for example, amines or hydroxyl-ethyl modified amines.

25. Use of a material according to any one of claims 1 to 10, or use of an ink according to any one of claims 19 to 24, in the manufacture of a security document.

## Patentansprüche

1. Transparentes infrarotabsorbierendes Material, beinhaltend:
ein Trägervehikel; und
mindestens einen infrarotabsorbierenden Farbstoff, der auf Nanopartikeln mit einer durchschnittlichen Größe von nicht mehr als 100 nm getragen wird,
wobei die farbstofftragenden Nanopartikel aus anorganischem Material gebildet und in dem Trägervehikel dispergiert sind, so dass das infrarotabsorbierende Material für sichtbare Strahlung im Wesentlichen transparent ist, und
wobei das Trägervehikel ein Druckmedium ist.

2. Material nach Anspruch 1, wobei die durchschnittliche Größe der Nanopartikel im Wesentlichen in den Bereich von 30 nm bis 100 nm und bevorzugter von etwa 50 nm bis etwa 80 nm fällt.

3. Material nach Anspruch 1 oder Anspruch 2, wobei das Druckmedium eine Druckfarbe oder ein Harz ist.

4. Material nach einem der Ansprüche 1 bis 3, wobei das Trägervehikel ein Harz auf Polymerbasis beinhaltet.

5. Material nach einem der vorstehenden Ansprüche, wobei die Nanopartikel aus mindestens einem IR-absorbierenden Material gebildet sind oder aus mindestens einem leitenden, halbleitenden Material oder isolierenden Material gebildet sind.

6. Material nach Anspruch 5, wobei das mindestens eine IR-absorbierende Material für die Nanopartikel eine metallische oder halbleitende Spezies, wie Silizium und seine Verbindungen, ein Metall, ein Metallsalz, ein Metalloxid oder ein Metallnitrid oder ein Gemisch von zwei oder mehreren dieser Materialien enthält.

7. Material nach Anspruch 6, wobei die metallische oder halbleitende Spezies aus der Gruppe ausgewählt ist, die aus Gruppe 13, Gruppe 14, Übergangsmetallen und Seltenerdmetallen besteht.

8. Material nach Anspruch 6 oder 7, wobei die metallische oder halbleitende Spezies ausgewählt ist aus der Gruppe, bestehend aus Silizium, Germanium, den metallischen Elementen der Periode 3, den metallischen Elementen der Periode 4, den metallischen Elementen der Periode 5 und den metallischen Elementen der Lanthanidenreihe.

9. Material nach Anspruch 6, wobei die metallische Spezies für die Nanopartikel ausgewählt ist aus Aluminiumoxid (Al₂O₃), Siliciumdioxid (SiO₂), Tonen und Glimmern, beinhaltend Fluorglimmertone und modifizierte Montmorillonite, wie Cloisit B, Lanthan und seinen Verbindungen, wie Lanthanhexaborid (LaB₆), Indium und seinen Verbindungen, wie Indiumzinnoxid (ITO), und Kombinationen dieser Materialien.

10. Material nach einem der vorstehenden Ansprüche, wobei der infrarotabsorbierende Farbstoff ein organischer oder komplexierter Farbstoff ist oder ein Farbstoff auf Perylenbasis oder Dithiolenbasis ist.

11. Verfahren zur Herstellung eines transparenten infrarotabsorbierenden Materials nach Anspruch 1 oder einer Druckfarbenformulierung, das die Schritte beinhaltet:
Mischen mindestens eines infrarotabsorbierenden Farbstoffs mit Partikeln eines anorganischen Materials,
Nanovermahlung des Gemisches zur Herstellung von Nanopartikeln des anorganischen Materials, auf dem der infrarotabsorbierende Farbstoff getragen wird, wobei die Nanopartikel eine durchschnittliche Größe von nicht mehr als 100 nm aufweisen, und
Dispergieren der farbstofftragenden Nanopartikel in einem Druckmedium-Trägervehikel, um ein infrarotabsorbierendes Material herzustellen, das für sichtbare Strahlung im Wesentlichen transparent ist.

12. Verfahren nach Anspruch 11, wobei das Herstellungsverfahren physikalische, chemische oder thermische Mittel verwendet, die zu einer bathochromen oder hypsochromen Verschiebung führen.

13. Verfahren nach Anspruch 12, wobei die bathochrome oder hypsochrome Verschiebung thermisch durch Erhöhen der Temperatur der Formulierung erhalten wird, vorzugsweise durch Erhitzen der Formulierung auf eine Temperatur zwischen 40°C und 120°C, und bevorzugter auf eine Temperatur, die im Wesentlichen in den Bereich von 80°C bis 100°C fällt.

14. Verfahren nach Anspruch 13, wobei die Formulierung während oder nach dem Erhitzen nanovermahlen wird.

15. Verfahren nach einem der Ansprüche 12 bis 14, wobei die bathochrome oder hypsochrome Verschiebung chemisch durch die Verwendung mindestens eines chemischen Modifizierungsmittels erhalten wird, wobei vorzugsweise das mindestens eine chemische Modifizierungsmittel aus einer Gruppe ausgewählt wird, die Amine und Hydroxyethyl-modifizierte Amine beinhaltet.

16. Verfahren nach einem der Ansprüche 13 bis 15, wobei das Erhitzen und/oder die chemische Modifizierung entweder als getrennte Behandlungsschritte oder gleichzeitig während der Herstellung der Formulierung unter Misch- oder Mahlbedingungen unter hoher Scherwirkung durchgeführt werden.

17. Sicherheitsdokument, das ein transparentes infrarotabsorbierendes Material nach einem der Ansprüche 1 bis 10 enthält.

18. Sicherheitsdokument nach Anspruch 17, wobei das Dokument ein transparentes Fenster beinhaltet und das infrarotabsorbierende Material auf das Fenster aufgebracht oder darin eingearbeitet ist.

19. Druckfarbenformulierung, die ein oder mehrere Harze oder Gemisch von Harzen, mindestens einen infrarotabsorbierenden Farbstoff, der auf Nanopartikeln mit einer durchschnittlichen Größe von nicht mehr als 100 nm in mindestens einer Richtung getragen wird, enthält, wobei die Nanopartikel aus anorganischem Material gebildet sind und in einem Trägervehikel dispergiert sind, so dass die Druckfarbenformulierung für sichtbare Strahlung im Wesentlichen transparent ist.

20. Druckfarbenformulierung nach Anspruch 19, wobei das Harz oder das Gemisch von Harzen aus thermoplastischen, elastomeren oder duroplastischen Harzen oder einer wässrigen oder lösungsmittelbasierten Harzdispersion ausgewählt ist.

21. Druckfarbenformulierung nach Anspruch 19 oder Anspruch 20, wobei ein oder mehrere infrarotabsorbierende Farbstoffe auf dem gleichen Typ von Nanopartikeln oder verschiedenen Typen von Nanopartikeln getragen werden.

22. Druckfarbenformulierung nach einem der Ansprüche 19 bis 21, wobei die Formulierung weiter mindestens einen anderen infrarotabsorbierenden Farbstoff enthält, der nicht auf Nanopartikeln getragen wird.

23. Druckfarbenformulierung nach einem der Ansprüche 19 bis 22, wobei die Druckfarbenformulierung andere Additive, Mittel oder Komponenten enthält, die aus Rheologiemodifizierungsmitteln, Fließsteuerungsmitteln, Tensiden, Haftvermittlern, Klebharzen, UV-Absorbern, Flammschutzmitteln, Oberflächenveredelungsmitteln, die Glanz oder Mattheit fördern, anderen Lösungsmitteln zur Verbesserung der Mischbarkeit oder Dispersion oder anderen Dispergiermitteln ausgewählt, aber nicht darauf beschränkt sind.

24. Druckfarbenformulierung nach einem der Ansprüche 19 bis 23, wobei die Druckfarbenformulierung Mittel enthält, die eine bathochrome oder hypsochrome Verschiebung erleichtern, zum Beispiel Amine oder Hydroxyethyl-modifizierte Amine.

25. Verwendung eines Materials nach einem der Ansprüche 1 bis 10 oder Verwendung einer Druckfarbe nach einem der Ansprüche 19 bis 24 bei der Herstellung eines Sicherheitsdokuments.

## Revendications

1. Matériau transparent absorbant les infrarouges incluant :
un véhicule vecteur ; et
au moins un colorant absorbant les infrarouges supporté sur des nanoparticules ayant une taille moyenne non supérieure à 100 nm,
dans lequel les nanoparticules supportant le colorant sont formées à partir d'un matériau inorganique et sont dispersées dans le véhicule vecteur de telle sorte que le matériau absorbant les infrarouges soit sensiblement transparent au rayonnement visible, et
dans lequel le véhicule vecteur est un support d'impression.

2. Matériau selon la revendication 1, dans lequel la taille moyenne des nanoparticules tombe sensiblement dans la plage de 30 nm à 100 nm, et plus préférentiellement d'environ 50 nm à environ 80 nm.

3. Matériau selon la revendication 1 ou la revendication 2, dans lequel le support d'impression est une encre ou une résine.

4. Matériau selon l'une quelconque des revendications 1 à 3, dans lequel le véhicule vecteur inclut une résine à base de polymère.

5. Matériau selon l'une quelconque des revendications précédentes, dans lequel les nanoparticules sont formées à partir d'au moins un matériau absorbant les IR, ou sont formées à partir d'au moins un matériau conducteur ou semi-conducteur ou matériau isolant.

6. Matériau selon la revendication 5, dans lequel l'au moins un matériau absorbant les IR pour les nanoparticules inclut une espèce métallique ou semi-conductrice, par exemple le silicium et ses composés, un métal, un sel de métal, un oxyde de métal ou un nitrure de métal, ou un mélange de deux quelconques ou plus de ces matériaux.

7. Matériau selon la revendication 6, dans lequel l'espèce métallique ou semi-conductrice est sélectionnée dans le groupe consistant en les métaux du groupe 13, du groupe 14, de transition et les métaux des terres rares.

8. Matériau selon la revendication 6 ou la revendication 7, dans lequel l'espèce métallique ou semi-conductrice est sélectionnée dans le groupe consistant en le silicium, le germanium, les éléments métalliques de la période 3, les éléments métalliques de la période 4, les éléments métalliques de la période 5 et les éléments métalliques de la série des lanthanides.

9. Matériau selon la revendication 6, dans lequel l'espèce métallique pour les nanoparticules est sélectionnée parmi l'alumine (Al₂O₃), la silice (SiO₂), les argiles et les micas, y compris les argiles fluoromicas et les montmorillonites modifiées, par exemple la Cloisite B, le lanthane et ses composés, par exemple l'hexaborure de lanthane (LaB₆), l'indium et ses composés, par exemple l'oxyde d'indium d'étain (ITO), et les combinaisons de ces matériaux.

10. Matériau selon l'une quelconque des revendications précédentes, dans lequel le colorant absorbant les infrarouges est un colorant organique ou complexé, ou est un colorant à base de pérylène ou à base de dithiolène.

11. Procédé de production d'un matériau transparent absorbant les infrarouges selon la revendication 1, ou d'une formulation d'encre incluant les étapes suivantes :
mélange d'au moins un colorant absorbant les infrarouges avec des particules d'un matériau inorganique,
nanobroyage du mélange pour produire des nanoparticules du matériau inorganique sur lequel le colorant absorbant les infrarouges est supporté, les nanoparticules ayant une taille moyenne non supérieure à 100 nm, et
dispersion des nanoparticules supportant le colorant sur un véhicule vecteur de support d'impression pour produire un matériau absorbant les infrarouges qui est sensiblement transparent au rayonnement visible.

12. Procédé selon la revendication 11, dans lequel le procédé de production utilise un moyen physique, chimique ou thermique qui résulte en un déplacement bathochrome ou hypsochrome.

13. Procédé selon la revendication 12, dans lequel le déplacement bathochrome ou hypsochrome est obtenu thermiquement par augmentation de la température de la formulation, préférentiellement par chauffage de la formulation à une température comprise entre 40 °C et 120 °C, et plus préférentiellement une température tombant sensiblement dans la plage de 80 °C à 100 °C.

14. Procédé selon la revendication 13, dans lequel la formulation est nanobroyée durant ou après le chauffage.

15. Procédé selon l'une quelconque des revendications 12 à 14, dans lequel le déplacement bathochrome ou hypsochrome est obtenu chimiquement par l'utilisation d'au moins un modificateur chimique, préférentiellement l'au moins un modificateur chimique est sélectionné dans un groupe incluant des aminés et des aminés à modification hydroxy-éthyle.

16. Procédé selon l'une quelconque des revendications 13 à 15, dans lequel le chauffage et/ou la modification chimique sont réalisés soit comme des étapes de traitement distinctes soit simultanément alors que la formulation est préparée dans des conditions de mélange ou de broyage à cisaillement élevé.

17. Document de sécurité incorporant un matériau transparent absorbant les infrarouges selon l'une quelconque des revendications 1 à 10.

18. Document de sécurité selon la revendication 17, dans lequel le document inclut une fenêtre transparente et le matériau absorbant les infrarouges est appliqué à ou incorporé à l'intérieur de la fenêtre.

19. Formulation d'encre incluant une ou plusieurs résines ou un mélange de résines, au moins un colorant absorbant les infrarouges supporté sur des nanoparticules ayant une taille moyenne non supérieure à 100 nm au moins dans une direction, dans laquelle les nanoparticules sont formées à partir d'un matériau inorganique et sont dispersées dans un véhicule vecteur de telle sorte que la formulation d'encre soit sensiblement transparente au rayonnement visible.

20. Formulation d'encre selon la revendication 19, dans laquelle la résine ou le mélange de résines est sélectionné parmi des résines thermoplastiques, élastomères ou thermodurcissables ou une dispersion de résine à base de solvant ou aqueuse.

21. Formulation d'encre selon la revendication 19 ou la revendication 20, dans laquelle un ou plusieurs colorants absorbants les infrarouges sont supportés sur le même type de nanoparticule ou sur différents types de nanoparticules.

22. Formulation d'encre selon l'une quelconque des revendications 19 à 21, dans laquelle la formulation inclut en outre au moins un autre colorant absorbant les infrarouges non supporté sur des nanoparticules.

23. Formulation d'encre selon l'une quelconque des revendications 19 à 22, dans laquelle la formulation d'encre inclut d'autres additifs, agents ou composants sélectionnés, de manière non restrictive, parmi des modificateurs de rhéologie, des agents de régulation d'écoulement, des surfactants, des promoteurs d'adhésion, des résines adhésives, des absorbeurs d'UV, des agents ignifuges, des agents de finition de surface qui promeuvent une finition brillante ou mate, d'autres solvants pour améliorer la miscibilité ou la dispersion d'autres dispersants.

24. Formulation d'encre selon l'une quelconque des revendications 19 à 23, dans laquelle la formulation d'encre inclut des agents qui facilitent le déplacement bathochrome ou hypsochrome, par exemple des aminés ou des aminés à modification hydroxy-éthyle.

25. Utilisation d'un matériau selon l'une quelconque des revendications 1 à 10, ou utilisation d'une encre selon l'une quelconque des revendications 19 à 24, dans la fabrication d'un document de sécurité.
